# EUROPÄISCHE PATENTSCHRIFT

(11) **EP 2 836 738 B1**
(45) Veröffentlichungstag und Bekanntmachung des Hinweises auf die Patenterteilung: **02.10.2019**
(21) Anmeldenummer: 13712210.7
(22) Anmeldetag: 21.03.2013
(51) Int. Cl.: F16D 21/06, F16F 15/14

(54) **DREHMOMENTÜBERTRAGUNGSEINRICHTUNG**
TORQUE TRANSMISSION DEVICE
DISPOSITIF DE TRANSMISSION DE COUPLE DE ROTATION

(30) Priorität: 12.04.2012 DE 102012206002; 17.04.2012 DE 102012206322
(43) Veröffentlichungstag der Anmeldung: 18.02.2015
(73) Patentinhaber: Schaeffler Technologies AG & Co. KG, 91074 Herzogenaurach (DE)
(72) Erfinder: LORENZ, Elmar, 77836 Rheinmünster Söllingen (DE)
(86) Internationale Anmeldenummer: PCT/EP2013/055977
(87) Internationale Veröffentlichungsnummer: WO 2013/152939

(56) Entgegenhaltungen:
- EP-A2- 2 011 682
- WO-A1-03/012307
- DE-A1- 10 146 837
- DE-A1-102008 016 269
- DE-A1-102010 021 036
- US-A1- 2010 282 560

## Beschreibung

Die Erfindung betrifft eine Drehmomentübertragungseinrichtung mit den Merkmalen gemäß dem Oberbegriff von Anspruch 1.

Aufgabe der Erfindung ist es, einen einfachen und Bauteil sparenden Aufbau einer Drehmomentübertragungseinrichtung zu erzielen. Weiterhin soll eine gute Schwingungsdämpfung bewirkt werden.

Erfindungsgemäß wird diese Aufgabe durch eine Drehmomentübertragungseinrichtung mit den Merkmalen gemäß Anspruch 1 gelöst.

Entsprechend wird eine Drehmomentübertragungseinrichtung umfassend eine in einem Gehäuse aufgenommene Kupplungseinrichtung mit einer ersten Kupplungsvorrichtung, aufweisend ein erstes durch ein erstes Betätigungselement betätigbares Lamellenpaket, einen ersten Antriebslamellenträger und ein mit einer ersten Getriebeeingangswelle verbindbares erstes Abtriebsbauteil und einer zweiten Kupplungsvorrichtung aufweisend ein zweites durch ein zweites Betätigungselement betätigbares Lamellenpaket, einen zweiten Antriebslamellenträger und ein mit einer zweiten Getriebeeingangswelle verbindbares zweites Abtriebsbauteil vorgeschlagen, wobei der erste und zweite Antriebslamellenträger miteinander verbunden sind oder einteilig ausgebildet sind und ein Zwischenbauteil wirksam zwischen dem ersten und zweiten Lamellenpaket angeordnet ist, zur Abstützung der auf das erste und das zweite Lamellenpaket einwirkenden Betätigungskraft. Ein Torsionsschwingungsdämpfer mit einem Dämpfereingangsteil und einem entgegen der Wirkung von Energiespeicherelementen gegenüber dem Dämpfereingangsteil begrenzt verdrehbares Dämpferausgangsteil ist außerhalb des Gehäuses angeordnet wobei das Dämpferausgangsteil mittelbar oder unmittelbar mit dem Antriebslamellenträger verbindbar ist. Dadurch kann eine gute Schwingungsdämpfung bei zugleich einfachem und Bauteile sparendem Aufbau.

In einer besonders bevorzugten Ausführungsform der Erfindung ist das Dämpferausgangsteil mit Hilfe einer Verzahnung mit dem Antriebslamellenträger verbindbar. Beispielsweise über eine axiale Steckverzahnung.

In einer weiteren speziellen Ausgestaltung der Erfindung nimmt das Zwischenbauteil eine Fliehkraftpendeleinrichtung auf. Vorzugsweise umfasst die Fliehkraftpendeleinrichtung eine Pendelmasse, die begrenzt verschwenkbar an dem Zwischenbauteil aufgenommen ist. Vorteilhafterweise weist die Fliehkraftpendeleinrichtung ein Pendelmassenpaar umfassend wenigstens zwei axial beabstandet zueinander angeordnete Pendelmassen auf, wobei das Pendelmassenpaar gegenüber dem Zwischenbauteil begrenzt verschwenkbar ist. Insbesondere ist die Fliehkraftpendeleinrichtung radial außerhalb des ersten und zweiten Lamellenpakets angeordnet.

In einer weiteren speziellen Ausführungsform der Erfindung ist der zweite Antriebslamellenträger umfangsseitig unterbrochen ausgestaltet, zur Ausbildung von wenigstens zwei umfangsseitig begrenzt sich erstreckenden Lamellenträgersegmenten. Vorzugsweise greifen die Lamellenträgersegmente durch das Zwischenbauteil axial durch. Insbesondere ist ein ringförmiges Sicherungsbauteil um die Lamellenträgersegmente angeordnet, wobei das Sicherungsbauteil axial durch eine Verstemmung oder einen Sicherungsring gesichert sein kann. Vorteilhafterweise sind die Lamellenträgersegmente umfangsseitig gegenüber dem Zwischenbauteil zentriert, insbesondere durch Flankenzentrierung.

Eine weitere unabhängige und eigenständig zu betrachtende Erfindung, insbesondere losgelöst von der Anordnung und der Anwesenheit eines Torsionsschwingungsdämpfer und/oder Fliehkraftpendeleinrichtung, die die Aufgabe löst, ist auf eine Drehmoemntübertragungseinrichtung nach dem Oberbegriff von Anspruch 1 gerichtet, insbesondere auf die Verbindung zwischen Zwischenbauteil und Lamellenträger gerichtet. Diese betrifft die umfangsseitig unterbrochene Ausgestaltung des zweiten Antriebslamellenträgers zur Ausbildung von wenigstens zwei umfangsseitig begrenzt sich erstreckenden Lamellenträgersegmenten, wobei die Lamellenträgersegmente durch das Zwischenbauteil axial durchgreifen.

Weitere Vorteile und vorteilhafte Ausgestaltungen der Erfindung ergeben sich aus der Beschreibung und den Abbildungen, bei deren Darstellung zugunsten der Übersichtlichkeit auf eine maßstabsgetreue Wiedergabe verzichtet wurde. Alle erläuterten Merkmale sind nicht nur in der angegebenen Kombination, sondern auch in anderen Kombinationen beziehungsweise in Alleinstellung anwendbar, ohne den Rahmen der Erfindung zu verlassen.

Die Erfindung wird im Folgenden unter Bezugnahme auf die Abbildungen im Speziellen beschrieben. Es zeigen im Einzelnen:
- Figur 1:: Halbschnitt einer Drehmomentübertragungseinrichtung in einer speziellen Ausführungsform der Erfindung.
- Figur 2:: Ausschnitt eines Querschnitts einer Kupplungseinrichtung in einer weiteren speziellen Ausführungsform der Erfindung.
- Figur 3:: Ausschnitt einer räumlichen Ansicht eines Teils der Kupplungseinrichtung aus Figur 2.
- Figur 4:: Halbschnitt einer Drehmomentübertragungseinrichtung in einer weiteren speziellen Ausführungsform der Erfindung.
- Figur 5:: Halbschnitt der Drehmomentübertragungseinrichtung aus Figur 4 mit eingezeichnetem Kraftfluss.

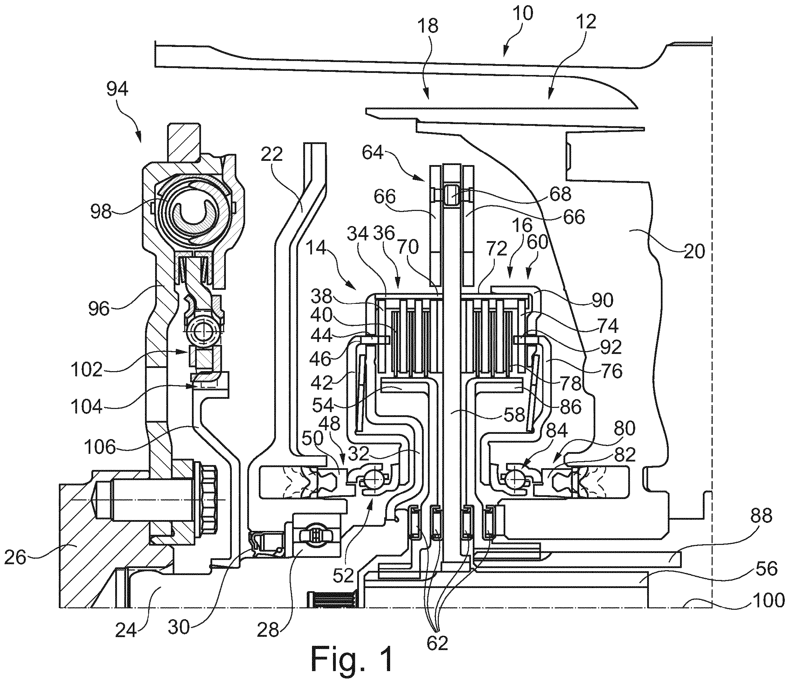

Figur 1 zeigt einen Halbschnitt einer Drehmomentübertragungseinrichtung 10 in einer speziellen Ausführungsform der Erfindung. Die Drehmomentübertragungseinrichtung 10 umfasst eine Kupplungseinrichtung 12 mit einer ersten Kupplungsvorrichtung 14 und einer zweiten Kupplungsvorrichtung 16, hier insgesamt als nass laufende Doppelkupplung ausgeführt. Die Kupplungseinrichtung 12 ist in einem ein Fluid aufnehmenden, geschlossenen Gehäuse 18 angeordnet (in dieser Abbildung ist das Gehäuse offen, was an der unvollständigen Darstellung liegt und nicht die wahren Verhältnisse wiedergibt). Das Gehäuse 18 setzt sich aus der Kupplungsglocke 20 und einem Gehäusebauteil 22 zusammen. Insgesamt ist das Gehäuse 18 drehfest gegenüber der Drehachse 100. Hingegen ist die Antriebsnabe 24 gegenüber der Drehachse 100 drehbar und dient der Anbindung der Kupplungseinrichtung 12 an ein Antriebselement 26. Die Antriebsnabe 24 ist über ein Deckellager 28 drehbar gegenüber dem Gehäusebauteil 22 gelagert und mit Hilfe eines Dichtelements 30 gegenüber dem Gehäusebauteil 22 abgedichtet.

Mit der Antriebsnabe 24 ist innerhalb des Gehäuses 18 ein Antriebsbauteil 32 drehfest verbunden. Das Antriebsbauteil 32 ist radial nach ausen verlängert ausgeführt und mit einem ersten Antriebslamellenträger 34 der ersten Kupplungsvorrichtung 14 einteilig ausgeführt. Der erste Antriebslamellenträger 34 umschließt ein erstes Lamellenpaket 36 radial und ist mit ersten Antriebslamellen 38 über eine Verzahnung drehfest verbunden. Die ersten Antriebslamellen 38 können mit ersten Abtriebslamellen 40 in Reibkontakt gebracht werden zur Drehmomentübertragung über das erste Lamellenpaket 36. Die Betätigung des ersten Lamellenpaktes 36 erfolgt durch ein erstes Betätigungselement 42, das axial verlagerbar an dem Antriebsbauteil 32 aufgenommen ist. Dazu greifen Betätigungsfinger 44 des ersten Betätigungsbauteils 42 zur Betätigung des ersten Lamellenpakets 36 durch Aussparungen 46 in dem Antriebsbauteil 42 hindurch. Die Betätigung erfolgt durch eine erste Ausrückeinheit 48, die einen in dem Gehäusebauteil 22 eingebrachten axial verschiebbaren Kolben 50 und ein Betätigungslager 52 umfasst.

Die ersten Abtriebslamellen 40 sind auf einem ersten Abtriebsbauteil 54, hier als innerer Lamellenträger ausgeführt, mit Hilfe einer Verzahnung axial verschiebbar und drehfest verbunden. Das erste Abtriebsbauteil 54 weist in einem radial innen liegenden Bereich eine Verzahnung zur Verbindung mit einer ersten Getriebeeingangswelle 56 auf.

Die Abstützung der durch eine Betätigung des ersten Betätigungselements 42 bewirkten Betätigungskraft erfolgt mit Hilfe eines Zwischenbauteils 58, das wirksam zwischen dem ersten Lamellenpaket 36 und einem zweiten Lamellenpaket 60 eingebracht ist und hier speziell als scheibenförmiges Bauteil ausgeführt ist. An einem radial inneren Bereich ist das Zwischenbauteil 58 durch Lagerelemente 62, speziell durch Axiallager abgestützt. An einem radial außerhalb des ersten Lamellenpakets 36 und zweiten Lamellenpakets 60 liegenden Bereich ist an dem Zwischenbauteil 58 eine Fliehkraftpendeleinrichtung 64 aufgenommen, die wenigstens zwei axial zueinander beabstandet angeordnete Pendelmassen 66 umfasst. Die Pendelmassen 66 sind begrenzt gegenüber dem Zwischenbauteil 58 verschwenkbar und mit Hilfe eines Abrollelements 68 gelagert an diesem aufgenommen.

In einem radial innerhalb der Fliehkraftpendeleinrichtung 64 befindlichen, aber noch außerhalb des ersten Lamellenpakets 36 und zweiten Lamellenpakets 60 liegenden Bereich sind an dem ersten Antriebslamellenträger 34 Lamellenträgersegmente 70 ausgebildet, die axial durch das Zwischenbauteil 58 durchgreifen und im Anschluss auf der dem ersten Antriebslamellenträger 34 abgewandten Seite des Zwischenbauteils 58 den zweiten Antriebslamellenträger 72 bilden, an dem die zweiten Antriebslamellen 74 verzahnt eingehängt sind. Die zweiten Antriebslamellen 74 können durch ein zweites Betätigungselement 76 mit zweiten Abtriebslamellen 78 in Reibeingriff gebracht werden. Die Betätigung erfolgt mit Hilfe einer zweiten Ausrückeinheit 80, umfassend einen Kolben 82 und ein Betätigungslager 84. Die zweiten Abtriebslamellen 78 sind an einem zweiten Abtriebsbauteil 86, hier ein innerer Lamellenträger drehfest und axial verschiebbar aufgenommen. Das zweite Abtriebsbauteil 86 ist in einem radial inneren Bereich mit Hilfe einer Verzahnung mit einer zweiten Getriebeeingangswelle 88 verbindbar.

Die Lamellenträgersegmente 70 sind mit Hilfe eines ringförmigen Sicherungsbauteils 90 stabilisiert, wobei das Sicherungsbauteil 90 eine radiale Verlängerung aufweist, durch die das zweite Betätigungselement 76 mit Betätigungsfingern 92 axial durchgreift.

Wirksam zwischen einem Antriebselement 26, beispielsweise einer Brennkraftmaschine oder einem Elektromotor und der Kupplungseinrichtung 12 ist ein außerhalb des Gehäuses 18 angeordneter Torsionsschwingungsdämpfer 94 eingebracht. Der Torsionsschwingungsdämpfer 94 weist ein Dämpfereingangsteil 96 und ein entgegen der der Wirkung von Energiespeicherelementen 98 gegenüber dem Dämpfereingangsteil 96 begrenzt verdrehbares Dämpferausgangsteil 102 auf. Das Dämpferausgangsteil 102 ist über eine axiale Steckverzahnung 104 mit einem Antriebsflansch 106 verbindbar, wobei der Antriebsflansch 106 mit der Antriebsnabe 24 drehfest verbunden ist.

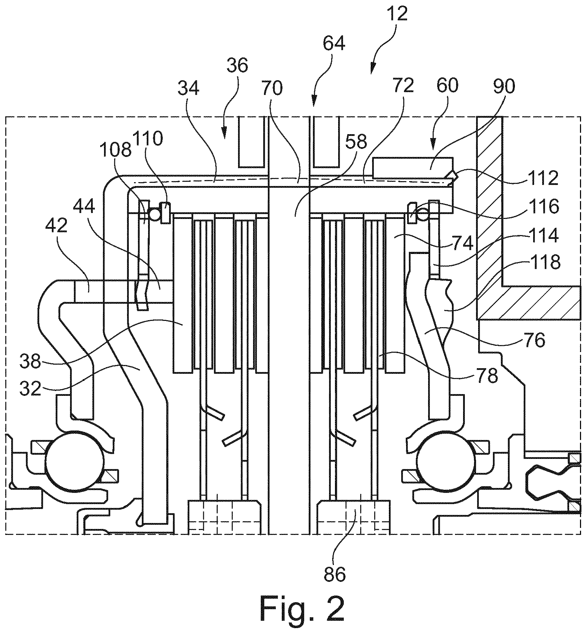

In Figur 2 ist ein Ausschnitt eines Querschnitts einer Kupplungseinrichtung 12 in einer weiteren speziellen Ausführungsform der Erfindung dargestellt. Das erste Betätigungselement 42 greift mit Betätigungsfingern 44 durch das Antriebsbauteil 32 durch. Axial zwischen dem Antriebsbauteil 32 und der ersten Antriebslamelle 38 ist ein Rückstellelement 108 mit Hilfe eines Sicherungsrings 110 an dem ersten Antriebslamellenträger 34 aufgenommen, das eine Rückstellung des ersten Betätigungselements 42 bewirken kann, so dass das erste Lamellenpaket 36 von einem betätigten Zustand in einen gelösten, also nicht betätigten Zustand überführt werden kann.

Das Zwischenbauteil 58 ist wirksam zwischen dem ersten Lamellenpaket 36 und zweiten Lamellenpaket 60 angeordnet und weist an einem radial außerhalb des ersten Lamellenpakets 36 und zweiten Lamellenpakets 60 befindlichen Bereich eine Fliehkraftpendeleinrichtung 64 auf. In einem radial innerhalb der Fliehkraftpendeleinrichtung 64 befindlichen, aber noch außerhalb des ersten Lamellenpakets 36 und zweiten Lamellenpakets 60 liegenden Bereich sind an dem ersten Antriebslamellenträger 34 Lamellenträgersegmente 70 ausgebildet, die axial durch das Zwischenbauteil 58 durchgreifen und im Anschluss auf der dem ersten Antriebslamellenträger 34 abgewandten Seite des Zwischenbauteils 58 den zweiten Antriebslamellenträger 72 bilden. Die Lamellenträgersegmente 70 sind mit Hilfe eines um die Lamellenträgersegmente 70 angeordneten, ringförmigen Sicherungsbauteils 90 gesichert und stabilisiert. Das Sicherungsbauteil 90 ist über eine Verstemmung 112 an den Lamellenträgersegmenten 70 gehalten.

An den Lamellenträgersegmenten 70 sind die zweiten Antriebslamellen 74 verzahnt eingehängt. Die zweiten Antriebslamellen 74 können durch ein zweites Betätigungselement 76 mit zweiten Abtriebslamellen 78 in Reibeingriff gebracht werden. Die zweiten Abtriebslamellen 78 sind an einem zweiten Abtriebsbauteil 86, hier ein innerer Lamellenträger drehfest und axial verschiebbar aufgenommen. Das zweite Abtriebsbauteil 86 ist in einem radial inneren Bereich mit Hilfe einer Verzahnung mit einer zweiten Getriebeeingangswelle verbindbar. Die Rückstellkraft an dem zweiten Betätigungselement 76 wird durch ein zweites Rückstellelement 114 bewirkt, das an den Lamellenträgersegmenten 70 eingehängt und durch einen Sicherungsring 116 gesichert ist. In einem von den Lamellenträgersegmenten 70 ausgehenden radial inneren Bereich steht das zweite Rückstellelement 114 mit dem zweiten Betätigungselement 76 in Eingriff, wozu in dem zweiten Betätigungselement 76 Laschen 118 ausgeformt sind, in die das zweite Rückstellelement 114 zur Einleitung einer Rückstellkraft eingreift.

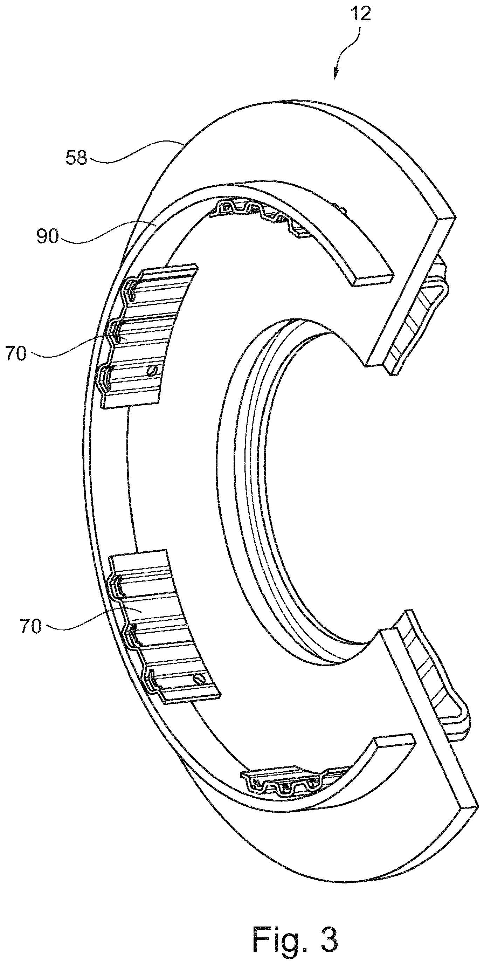

Figur 3 zeigt einen Ausschnitt einer räumlichen Ansicht eines Teils der Kupplungseinrichtung 12 aus Figur 2. Hier ist die umfangsseitig unterbrochene und begrenzte sich erstreckende Ausdehnung der Lamellenträgersegmente 70 erkennbar. Das Sicherungsbauteil 90 ist umfangsseitig vorzugsweise geschlossen ausgeführt und mit den Lamellenträgersegmenten 70 verstemmt.

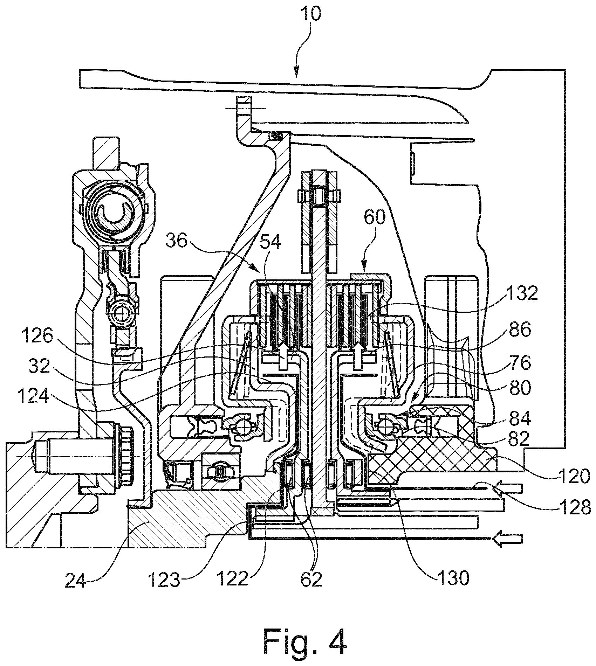

In Figur 4 ist ein Halbschnitt einer Drehmomentübertragungseinrichtung 10 in einer weiteren speziellen Ausführungsform der Erfindung dargestellt. Die zweiten Ausrückeinheit 80 umfasst einen Kolben 82 und ein Betätigungslager 84, wobei der Kolben 82 in einem vorzugsweise aus Kunsstoff bestehenden Gehäuse 120 aufgenommen und bewegbar ist. Weiterhin erfolgt ein Zustrom an Kühlfluid zur Kühlung des ersten Lamellenpakets 36 über eine Öffnung 122 zwischen Lagerelement 62 und Antriebsnabe 24, sowie durch einen Raum 124 zwischen Antriebsbauteil 32 und Abtriebsbauteil 54. Der erste Kühlfluidstrom 123 kann durch Öffnungen 126 in dem Abtriebsbauteil 54 strömen, um insbesondere von radial innen auf das Lamellenpaket 36 zu strömen und dieses in Richtung radial aussen zu durchfliessen.

Auch ist ein zweiter Kühlfluidstrom 128 vorgesehen zur Kühlung des zweiten Lamellenpakets 60, wobei das Kühlfluid eine Öffnung 130 in dem Gehäuse 128 durchströmen kann um in einen Raum 132 zwischen dem zweiten Betätigungselement 76 und dem zweiten Abtriebsbauteil 86 fliessen zu können, von wo aus es durch Öffnungen in dem Abtriebsbauteil 86 das zweite Lamellenpaket 60 von radial innen nach radial aussen durchfliesst.

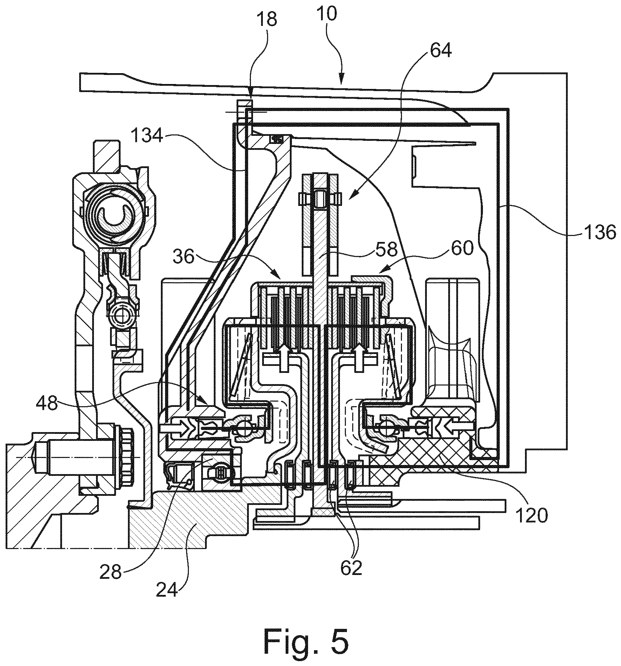

In Figur 5 ist ein Halbschnitt der Drehmomentübertragungseinrichtung aus Figur 4 mit eingezeichnetem Kraftfluss gezeigt. Bei Betätigung des ersten Lamellenpakets 36 durch die erste Ausrückeinheit 48 erfolgt ein geschlossener erster Kraftfluss 134, insbesondere über das Zwischenbauteil 58, die Lagerelemente 62 und das Gehäuse 120 in das Gehäuse 18.

Der zweite Kraftfluss 136 bei Betätigung des zweiten Lamellenpakets 60 erfolgt ebenfalls über das Zwischenbauteil 58 und die Lagerelemente 62 in die Antriebsnabe 24 und von hier über das Deckellager 28 in das Gehäuse 18.

Das Zwischenbauteil 58 dient vorzugsweise als Bauteil zur Übertragung der Abstützkraft von radial aussen nach radial innen, sowie insbesondere zur Aufnahme einer Fliehkraftpendeleinrichtung 64.

### Bezugszeichenliste

- 10: Drehmomentübertragungseinrichtung
- 12: Kupplungseinrichtung
- 14: Kupplungsvorrichtung
- 16: Kupplungsvorrichtung
- 18: Gehäuse
- 20: Kupplungsglocke
- 22: Gehäusebauteil
- 24: Antriebsnabe
- 26: Antriebselement
- 28: Deckellager
- 30: Dichtelement
- 32: Antriebsbauteil
- 34: Antriebslamellenträger
- 36: Lamellenpaket
- 38: Antriebslamelle
- 40: Abtriebslamelle
- 42: Betätigungselement
- 44: Betätigungsfinger
- 46: Aussparungen
- 48: Ausrückeinheit
- 50: Kolben
- 52: Betätigungslager
- 54: Abtriebsbauteil
- 56: Getriebeeingangswelle
- 58: Zwischenbauteil
- 60: Lamellenpaket
- 62: Lagerelement
- 64: Fliehkraftpendeleinrichtung
- 66: Pendelmassen
- 68: Abrollelement
- 70: Lamellenträgersegment
- 72: Antriebslamellenträger
- 74: Antriebslamelle
- 76: Betätigungselement
- 78: Abtriebslamelle
- 80: Ausrückeinheit
- 82: Kolben
- 84: Betätigungslager
- 86: Abtriebsbauteil
- 88: Getriebeeingangswelle
- 90: Sicherungsbauteil
- 92: Betätigungsfinger
- 94: Torsionsschwingungsdämpfer
- 96: Dämpfereingangsteil
- 98: Energiespeicherelement
- 102: Dämpferausgangsteil
- 104: Steckverzahnung
- 106: Antriebsflansch
- 108: Rückstellelement
- 110: Sicherungsring
- 112: Verstemmung
- 114: Rückstellelement
- 116: Sicherungsring
- 118: Lasche
- 120: Gehäuse
- 122: Öffnung
- 123: Kühlfluidstrom
- 124: Raum
- 126: Öffnung
- 128: Kühlfluidstrom
- 130: Öffnung
- 132: Raum
- 134: Kraftfluss
- 136: Kraftfluss

## Patentansprüche

1. Drehmomentübertragungseinrichtung (10) umfassend eine in einem Gehäuse (18) aufgenommene Kupplungseinrichtung (12) mit einer ersten Kupplungsvorrichtung (14), aufweisend ein erstes durch ein erstes Betätigungselement betätigbares Lamellenpaket (36), einen ersten Antriebslamellenträger (34) und ein mit einer ersten Getriebeeingangswelle verbindbares erstes Abtriebsbauteil und einer zweiten Kupplungsvorrichtung (16) aufweisend ein zweites durch ein zweites Betätigungselement betätigbares Lamellenpaket (60), einen zweiten Antriebslamellenträger (72) und ein mit einer zweiten Getriebeeingangswelle verbindbares zweites Abtriebsbauteil, wobei der erste und zweite Antriebslamellenträger miteinander verbunden sind oder einteilig ausgebildet sind und ein Zwischenbauteil (58) wirksam zwischen dem ersten und zweiten Lamellenpaket (36, 60) angeordnet ist, zur Abstützung der auf das erste und das zweite Lamellenpaket einwirkenden Betätigungskraft, **dadurch gekennzeichnet, dass** ein Torsionsschwingungsdämpfer (94) mit einem Dämpfereingangsteil (96) und einem entgegen der Wirkung von Energiespeicherelementen (98) gegenüber dem Dämpfereingangsteil (96) begrenzt verdrehbaren Dämpferausgangsteil (102) außerhalb des Gehäuses (18) angeordnet ist und das Dämpferausgangsteil (102) mittelbar oder unmittelbar mit dem Antriebslamellenträger (34) verbindbar ist, wobei das Zwischenbauteil (58) eine Fliehkraftpendeleinrichtung (64) aufnimmt, wobei die Fliehkraftpendeleinrichtung (64) eine Pendelmasse (66) umfasst, die begrenzt verschwenkbar an dem Zwischenbauteil (58) aufgenommen ist, wobei die Fliehkraftpendeleinrichtung (64) radial außerhalb des ersten und zweiten Lamellenpakets (36, 60) angeordnet ist.

2. Drehmomentübertragungseinrichtung (10) nach Anspruch 1, wobei das Dämpferausgangsteil (102) mit Hilfe einer Verzahnung mit dem Antriebslamellenträger (34) verbindbar ist.

3. Drehmomentübertragungseinrichtung (10) nach Anspruch 1 oder 2, wobei die Fliehkraftpendeleinrichtung (64) ein Pendelmassenpaar umfassend wenigstens zwei axial beabstandet zueinander angeordnete Pendelmassen (66) aufweist, wobei das Pendelmassenpaar gegenüber dem Zwischenbauteil (58) begrenzt verschwenkbar ist.

## Claims

1. Torque transmission device (10) comprising a clutch device (12) which is received in a housing (18) with a first clutch apparatus (14), having a first multiple disc assembly (36) which can be actuated by way of a first actuating element, a first drive multiple disc carrier (34) and a first output component which can be connected to a first transmission input shaft, and a second clutch apparatus (16) having a second multiple disc assembly (60) which can be actuated by way of a second actuating element, a second drive multiple disc carrier (72) and a second output component which can be connected to a second transmission input shaft, the first and second drive multiple disc carriers being connected to one another or being configured in one piece, and an intermediate component (58) being arranged operatively between the first and second multiple disc assembly (36, 60), for the support of the actuating force which acts on the first and the second multiple disc assembly, **characterized in that** a torsional vibration damper (94) is arranged outside the housing (18) with a damper input part (96) and a damper output part (102) which can be rotated to a limited extent with respect to the damper input part (96) counter to the action of energy store elements (98), and the damper output part (102) can be connected indirectly or directly to the drive multiple disc carrier (34), the intermediate component (58) receiving a centrifugal force pendulum device (64), the centrifugal force pendulum device (64) comprising a pendulum mass (66) which is received on the intermediate component (58) such that it can be pivoted to a limited extent, the centrifugal force pendulum device (64) being arranged radially outside the first and second multiple disc assembly (36, 60).

2. Torque transmission device (10) according to Claim 1, it being possible for the damper output part (102) to be connected to the drive multiple disc carrier (34) with the aid of a toothing system.

3. Torque transmission device (10) according to Claim 1 or 2, the centrifugal force pendulum device (64) having a pendulum mass pair comprising at least two pendulum masses (66) which are arranged spaced apart axially from one another, it being possible for the pendulum mass pair to be pivoted to a limited extent with respect to the intermediate component (58).

## Revendications

1. Système de transfert de couple (10), comprenant un système d'embrayage (12) reçu dans un boîtier (18) avec un premier dispositif d'embrayage (14) présentant un premier paquet de disques (36) pouvant être actionné par un premier élément d'actionnement, un premier support de disques d'entraînement (34) et un premier composant de prise de force pouvant être connecté à un premier arbre d'entrée de boîte de vitesses et un deuxième dispositif d'embrayage (16) présentant un deuxième paquet de disques (60) pouvant être actionné par un deuxième élément d'actionnement, un deuxième support de disques d'entraînement (72) et un deuxième composant de prise de force pouvant être connecté à un deuxième arbre d'entrée de boîte de vitesses, le premier et le deuxième support de disques d'entraînement étant connectés l'un à l'autre ou étant réalisés d'une seule pièce et un composant intermédiaire (58) étant disposé de manière active entre le premier et le deuxième paquet de disques (36, 60) pour supporter la force d'actionnement agissant sur le premier et le deuxième paquet de disques, **caractérisé en ce qu'**un amortisseur d'oscillations de torsion (94) avec une partie d'entrée d'amortisseur (96) et une partie de sortie d'amortisseur (102), pouvant tourner de manière limitée dans le sens opposé à l'action d'éléments accumulateur d'énergie (98) par rapport à la partie d'entrée d'amortisseur (96) est disposé à l'extérieur du boîtier (18) et la partie de sortie d'amortisseur (102) peut être connectée de manière directe ou indirecte au support de disques d'entraînement (34), le composant intermédiaire (58) recevant un système de pendule à force centrifuge (64), le système de pendule à force centrifuge (64) comprenant une masse de pendule (66) qui est reçue de manière à pouvoir pivoter de manière limitée au niveau du composant intermédiaire (58), le système de pendule à force centrifuge (64) étant disposé radialement à l'extérieur du premier et du deuxième paquet de disques (36, 60).

2. Système de transfert de couple (10) selon la revendication 1, dans lequel la partie de sortie d'amortisseur (102) peut être connectée à l'aide d'une denture au support de disques d'entraînement (34).

3. Système de transfert de couple (10) selon la revendication 1 ou 2, dans lequel le système de pendule à force centrifuge (64) présente une paire de masses de pendule comprenant au moins deux masses de pendule (66) disposées à distance axiale l'une de l'autre, la paire de masses de pendule pouvant pivoter de manière limitée par rapport au composant intermédiaire (58).
